# EUROPEAN PATENT SPECIFICATION

(11) **EP 1 150 562 B1**
(45) Date of publication and mention of the grant of the patent: **28.04.2004**
(21) Application number: 00908506.9
(22) Date of filing: 07.02.2000
(51) Int. Cl.: A01N 25/08

(54) **LIGHT, EXTRUDED COMPOSITIONS CONTAINING A LIGHT, EXTRUDABLE, CERAMIC CARRIER, METHODS FOR THEIR USE, AND PROCESSES FOR THEIR PREPARATION**
LEICHTE EXTRUDIERTE ZUSAMMENSETZUNGEN ENTHALTEND EINEN LEICHTEN EXTRUDIERBAREN KERAMIKTRÄGERSTOFF, VERFAHREN ZU DEREN HERSTELLUNG UND DEREN VERWENDUNG
COMPOSITIONS EXTRUDEES ET LEGERES CONTENANT UN SUPPORT CERAMIQUE EXTRUDABLE ET LEGER, LEURS PROCEDES D'UTILISATION ET LEUR PREPARATION

(30) Priority: 11.02.1999 US 248859
(43) Date of publication of application: 07.11.2001
(73) Proprietor: BASF AKTIENGESELLSCHAFT, 67056 Ludwigshafen (DE)
(72) Inventor: TAKAYANAGI, Norikazu, Aichi (JP); KIMPARA, Masaomi, Shizuoka (JP); SUZUKI, Munehiro, Aichi 441-8087 (JP)
(86) International application number: PCT/US2000/003073
(87) International publication number: WO 2000/047044

(56) References cited:
- EP-A- 0 280 289
- WO-A-93/25074
- WO-A-95/08265
- US-A- 5 833 733
- DATABASE WPI Week 199506 Derwent Publications Ltd., London, GB; AN 1995-041123 XP002137030 & JP 06 321704 A (HOKKO CHEM INC CO LTD), 22 November 1994 (1994-11-22) cited in the application

## Description

### BACKGROUND OF THE INVENTION

Solid agricultural compositions which may be applied to the surface water of paddy fields are known in the art (see, for example, U.S. 5,833,733 and JP 6-321704).

U.S. 5,833,733 describes agrochemical formulations for water surface application. These formulations require: (1) a solid core material having an apparent specific density of less than 1 and a particle diameter within the range from about 300 µm to about 1,400 µm; and (2) at least one oily substance. However, this patent does not disclose any extruded formulations. It is difficult to prepare extruded formulations containing large particle sizes of low-density carriers because large, low-density particles are not entirely stable to the conditions encountered during extrusion processes. In addition, the use of oily substances is not entirely satisfactory because oily substances may reduce the uniformity of the extruded composition and/or may decrease the flash point of the finished product.

JP 6-321704 describes pesticidal formulations for water surface application. The formulations described in JP 6-321704 require hollow, glass bodies having an average particle diameter of 100 µm or less. However, that application does not disclose any extruded formulations. It is difficult to prepare extruded formulations containing hollow, glass bodies because hollow, glass bodies are not entirely stable to the conditions encountered during extrusion processes.

WO 93/25074 and WO 95/08265 both relate to water dispersable granules which can contain titanium, aluminium or calcium oxides or silica. These formulations do not contain a light extrudable ceramic carrier and do not spread on the surface, but sink when applied an water.

It is, therefore, an object of the present invention to provide a light, extruded composition which avoids the use of low-density carriers having a particle range of about 300 µm to 1,400 µm; oily substances; and/or hollow, glass bodies.

It is also an object of the present invention to provide a method for applying at least one agricultural compound to the water of paddy fields by applying to the water surface of the paddy fields a light, extruded composition.

It is a further object of this invention to provide a process for the preparation of a light, extruded composition.

Other objects and advantages of the present invention will be apparent to those skilled in the art from the description below and the appended claims.

### SUMMARY OF THE INVENTION

The present invention relates to a light, extruded composition which comprises at least one agricultural compound; a light, extrudable, ceramic carrier; and at least one surface active agent.

The present invention also relates to a method for applying at least one agricultural compound to the water of paddy fields which method comprises applying to the water surface of the paddy fields a light, extruded composition comprising at least one agricultural compound; a light, extrudable, ceramic carrier; and at least one surface active agent.

The present invention further provides a process for the preparation of the light, extruded compositions of this invention.

### DETAILED DESCRIPTION OF THE INVENTION

The light, extruded compositions of this invention comprise at least one agricultural compound; a light, extrudable, ceramic carrier; and at least one surface active agent.

Preferred light, extruded compositions of the present invention are those comprising at least one agricultural compound; a light, extrudable, ceramic carrier; at least one surface active agent; a mineral carrier; and a binder.

More preferred light, extruded compositions of the present invention are those comprising, on a weight to weight basis, about 0.5% to 75% of one or more agricultural compound(s); about 15% to 90% of a light, extrudable, ceramic carrier; about 2% to 20% of one or more surface active agent(s); about 1% to 30% of a mineral carrier; and about 0.1% to 10% of a binder.

Most preferred light, extruded compositions of this invention are those comprising, on a weight to weight basis, about 1% to 60% of one or more agricultural compound(s); about 20% to 60% of a light, extrudable, ceramic carrier; about 2% to 15% of one or more surface active agent(s); about 1% to 15% of a mineral carrier; and about 0.5% to 5% of a binder.

The light, extrudable, ceramic carrier is an especially important element of the present compositions because: (1) the light, extrudable, ceramic carrier lowers the density of the compositions, and (2) the light, extrudable, ceramic carrier does not lose its desirable low density property when subjected to the process steps used to prepare the compositions of this invention. In contrast, hollow, glass bodies, which are used in conventional light, solid compositions, are not entirely stable to conditions encountered during the preparation of light, extruded compositions. In particular, hollow, glass bodies are not entirely stable to the pressure and shearing forces encountered in processes which include an extrusion step.

Light, extrudable, ceramic carriers suitable for use in this invention include ceramic carriers having a density less than the medium to which the light, extruded compositions are to be applied. The light, extrudable, ceramic carrier typically has a density of less than 1 g/cm³, and preferably has a density of from about 0.5 g/cm³ to 0.8 g/cm³. In a preferred embodiment of the present invention, the light, extrudable, ceramic carrier is prepared by: (1) heating a naturally occuring mineral composition which comprises silicon(IV) oxide, aluminum oxide, calcium oxide, iron(III) oxide and titanium(IV) oxide; (2) selecting particles having a density of from about 0.5 g/cm³ to 0.8 g/cm³; and (3) sieving the particles to obtain a light, extrudable, ceramic carrier having the desired particle size range. In another preferred embodiment of this invention, the light, extrudable, ceramic carrier is prepared from a composition which comprises, on a weight to weight basis, about 50% to 60% silicon(IV) oxide, about 25% to 45% aluminum oxide, about 0.1% to 6% calcium oxide, about 0.1% to 3% iron(III) oxide and about 0.1% to 2% titanium(IV) oxide. To ensure that the light, extrudable, ceramic carrier retains its desirable low density property, the light, extrudable, ceramic carrier preferably has a pressure strength (>40% survival) greater than about 150 kg/cm², and more preferably greater than about 500 kg/cm². The light, extrudable, ceramic carrier of the present invention preferably has an average particle size of about 20 µm to 300 µm, and more preferably, about 100 µm to 250 µm. Examples of light, extrudable, ceramic carriers suitable for use in the compositions of this invention include the E-SPHERES line of hollow, ceramic spheres commercially available from Taiheiyo Cement, Tokyo, Japan.

Agricultural compounds suitable for use in the light, extruded compositions of this invention include, but are not limited to, herbicides, insecticides, acaricides, nematicides, fungicides, molluscicides, plant growth regulators, safeners, algicides, and mildewicides, and mixtures thereof.

Herbicides suitable for use in the compositions of this invention include, but are not limited to, 2,4-D, 2,4-D-2-ethylhexyl, 2,4-D-isobutyl, 2,4-D-butyl, 2,4-D-calcium, 2,4-D-dimethylammonium, 2,4-D-diolamine, 2,4-D-isooctyl, 2,4-D-isopropyl, 2,4-D-potassium, 2,4-D-sodium, 2,4-D-trolamine, azimsulfuron, bensulfuron-methyl, bentazone, benzofenap, bifenox, bromobutide, butachlor, cafenstrole, chlormethoxynil, chlornitrofen, chlorthiamid, cinmethylin, cinosulfuron, clomeprop, cyclosulfamuron, cyclosulfamuron sodium salt, cyhalofopbutyl, dimepiperate, dimethametryn, dithiopyr, dymron, esprocarb, ethoxysulfuron, etobenzanid, fentrazamid, imazosulfuron, MCPA, MCPA-butyl, MCPA-calcium, MCPA-dimethylammonium, MCPA-isooctyl, MCPA-potassium, MCPA-sodium, MCPB, MCPB-ethyl, MCPB-sodium, MCPCA, mefenacet, molinate, naproanilide, oxadiazon, oxaziclomefone, pendimethalin, pentoxazone, piperophos, pretilachlor, prometryn, propanil, pyrazolate, pyrazosulfuron-ethyl, pyrazoxyfen, pyributicarb, simetryn, swep, thenylchlor, and thiobencarb, and mixtures thereof. Cyclosulfamuron, cafenstrole, and dymron, and mixtures thereof are preferred herbicides for use in the compositions of this invention.

Insecticides suitable for use in the compositions of this invention include, but are not limited to, acephate, alpha-cypermethrin, benfuracarb, bensultap, BPMC, buprofezin, carbaryl, carbofuran, carbosulfan, cartap, chlorfenapyr, chlorfenvinphos, chlorpyrifos-methyl, chlorpyrifos, cyanofenphos, cycloprothrin, diazinon, dimethoate, dioxabenzofos, disulfoton, EPN, ethofenprox, fenitrothion, fenthion, furathiocarb, isoprocarb, methyl isothiocyanate, isoxathion, malathion, methomyl, metolcarb, monocrotophos, nitenpyram, phenthoate, pirimiphos-ethyl, pirimiphos-methyl, propaphos, propoxur, pyraclofos, pyridaphenthion, quinalphos, tetrachlorvinphos, thiocyclam, thiodicarb, trichlorphon, vamidothion, XMC, xylylcarb, and 1-[1-(*p*-chlorophenyl)-2-fluoro-4-(4-fluoro-3-phenoxyphenyl)-2-butenyl]-cyclopropane (R,S)-(Z), and mixtures thereof.

Fungicides suitable for use in the compositions of this invention include, but are not limited to, benomyl, captan, diclomezine, edifenphos, fenoxanil, ferimzone, flutolanil, fthalide, iprobenfos, iprodione, isoprothiolane, kasugamycin, kasugamycin hydrochloride hydrate, mepronil, metalaxyl, methominostrobin, oxolinic acid, pencycuron, probenazole, pyroquilon, tecloftalam, thiophanate-methyl, TPN, tricyclazole, triflumizole, and validamycin, and mixtures thereof.

Surface active agents suitable for use in the compositions of the present invention include, but are not limited to, alkyl benzene sulfonates, alkyl naphthalene sulfonates, lignosulfonates, naphthalene sulfonate-formaldehyde condensates, alkyl naphthalene sulfonate-formaldehyde condensates, polyoxyethylene alkyl ethers, polyoxyethylene alkyl ether sulfates, polyoxyethylene alkyl ether phosphates, polyoxyethylene alkyl aryl ethers, polyoxyethylene alkyl aryl ether sulfates, polyoxyethylene alkyl aryl ether phosphates, polycarboxylates, sodium tripolyphosphates, hexameta phosphates, phenol sulfonates, alkyl sulfates, dialkyl sulfosuccinates, alkyl ether sulfates and acetylene glycols and mixtures thereof. Preferred surface active agents include alkyl naphthalene sulfonates such as a sodium alkyl naphthalene sulfonate and the like; polycarboxylates; naphthalene sulfonate-formaldehyde condensates such as a sodium naphthalene sulfonate-formaldehyde condensate and the like; and dialkyl sulfosuccinates such as a sodium alkyl sulfonated alkylate and the like; and mixtures thereof.

Mineral carriers suitable for use in the compositions of this invention include, but are not limited to, bentonites such as calcium bentonite and sodium bentonite; montmorillonite clays; kaolin clays; diatomaceous earth; and talc; and mixtures thereof. Sodium bentonite is a preferred mineral carrier.

Binders suitable for use in the compositions of the present invention include, but are not limited to, cellulose based binders such as sodium carboyxymethyl cellulose, hydroxy methyl cellulose, methyl cellulose, ethyl cellulose, and the like; dextrin; starch; poly(vinyl alcohol); sodium alginate; sodium polyacrylate; and gums such as xanthan gum, welan gum, gum arabic and the like; and mixtures thereof. Sodium carboxymethyl cellulose is a preferred binder.

The present invention further provides herbicidal compositions for the control of undesirable plant species in the presence of rice plants. Preferred herbicides for the control of undesirable plant species in the presence of rice plants include cyclosulfamuron, cafenstrole, dymron, pentoxazone, fentrazamid, dithiopyr, oxaziclomefone, clomeprop, and cinmethylin, and mixtures thereof. Preferred rice herbicide mixtures for use in the compositions of this invention include: cyclosulfamuron/cafenstrole/dymron mixtures; cyclosulfamuron/pentoxazone mixtures; cyclosulfamuron/fentrazamid/dymron mixtures; cyclosulfamuron/dithiopyr mixtures; cyclosulfamuron/oxaziclomefone mixtures; cyclosulfamuron/oxaziclomefone/clomeprop mixtures; and cyclosulfamuron/cinmethylin mixtures.

A preferred herbicidal composition of this invention comprises, on a weight to weight basis, about 0.2% to 7% cyclosulfamuron; about 10% to 20% cafenstrole; about 25% to 35% dymron; about 25% to 45% of a light, extrudable, ceramic carrier which: (1) is prepared from a composition which comprises silicon(IV) oxide, aluminum oxide, calcium oxide, iron(III) oxide and titanium(IV) oxide, (2) has an average particle size of about 100 µm to 250 µm, and (3) has a pressure strength greater than about 150 kg/cm²; about 4% to 8% of a sodium alkyl naphthalene sulfonate; about 0.5% to 2% of a mixture of a polycarboxylate and a sodium naphthalene sulfonate-formaldehyde condensate; about 1% to 3% of a sodium alkyl sulfonated alkylate; about 3% to 8% sodium bentonite; and about 1% to 3% sodium carboxymethyl cellulose.

The light, extruded compositions of this invention may be prepared by:
(a) mixing at least one agricultural compound; a light, extrudable, ceramic carrier; at least one surface active agent; optionally a mineral carrier; and optionally a binder with water to obtain an extrudable mixture;
(b) extruding the extrudable mixture from step (a) to obtain an extrudate; and
(c) drying the extrudate to obtain the light, extruded compositions of this invention.

Advantageously, the light, extrudable, ceramic carrier of the present invention is stable during the extrusion process and retains its desirable low-density property. In contrast, light, carriers made from materials such as glass and/or having a large average particle size are not entirely stable during the extrusion process and lose a significant amount of their desirable low density properties.

The light, extruded compositions of this invention may be applied directly to water, soil or other media for application of the agricultural compound(s). In particular, the light, extruded compositions of the present invention are useful for applying agricultural compounds to the water of paddy fields. Paddy-wide application of one or more agricultural compounds may be achieved by localized application(s) of the light, extruded compositions of this invention to the water surface of paddy fields. Accordingly, the present invention provides a method for applying at least one agricultural compound to the water of paddy fields by applying to the water surface of the paddy fields a light, extruded composition comprising at least one agricultural compound; a light, extrudable, ceramic carrier; and at least one surface active agent.

The light, extruded compositions of this invention may be packaged in a contained, water-soluble delivery system and applied to the water surface of paddy fields in water-soluble, packaged form. Water-soluble delivery systems include, but are not limited to, water-soluble poly(vinyl alcohol) bags (PVA bags), water-soluble.paper bags, and water-soluble bottles, and the like.

Alternatively, the light, extruded compositions of this invention may be packaged in uncontained systems and applied by hand, spoon, aerial or mechanical application from the uncontained system. Uncontained systems include, but are not limited to, bags, including foil lined bags, tubes including paper tubes, and hoppers, either hand held or attached to a mechanical applicator, such as a cultivator.

In order to facilitate a further understanding of the invention, the following examples are presented primarily for the purpose of illustrating more specific details thereof. The scope of the invention should not be deemed limited by the examples, but encompasses the entire subject matter defined in the claims.

### EXAMPLE 1

### Preparation of light, extruded compositions

A mixture of cyclosulfamuron (3.3 g, average particle size less than 20 µm); cafenstrole (15.75 g, average particle size less than 5 µm); dymron (31.50 g); sodium bentonite (4.8 g, particle size range 5-10 µm, commercially available as bentonite-Na type from Kunimine Co., Tokyo, Japan); NEWKALGEN WG-1 a sodium alkyl naphthalene sulfonate (6.0 g, commercially available from Takemoto Oil and Fat Co., Aichi, Japan); and CELLOGEN WS-C a sodium carboxymethyl cellulose (1.5 g, commercially available from Dai-Ichi Kogyo Seiyaku Co., Kyoto, Japan) is blended to obtain a first mixture. E-SPHERES SL-180 hollow ceramic spheres (34.15 g, average particle size 115 µm, commercially available from Taiheiyo Cement, Tokyo, Japan) are added to the first mixture and blended to obtain a second mixture. NEWKALGEN TG-285 a mixture of a polycarboxylate and a sodium naphthalene sulfonate-formaldehyde condensate (1.0 g, commercially available from Takemoto Oil and Fat Co.); NEWKALGEN EP-70G a sodium alkyl sulfonated alkylate (2.0 g, commercially available from Takemoto Oil and Fat Co.); and water are added to the second mixture and blended to obtain an extrudable mixture. The extrudable mixture is passed through a basket extruder to obtain extruded material. The extruded material is dried and sieved to give the light, extruded composition identified as composition 1 in Table I.

Using essentially the same process, the light, extruded compositions identified as compositions 2-16 in Tables I-V are obtained.

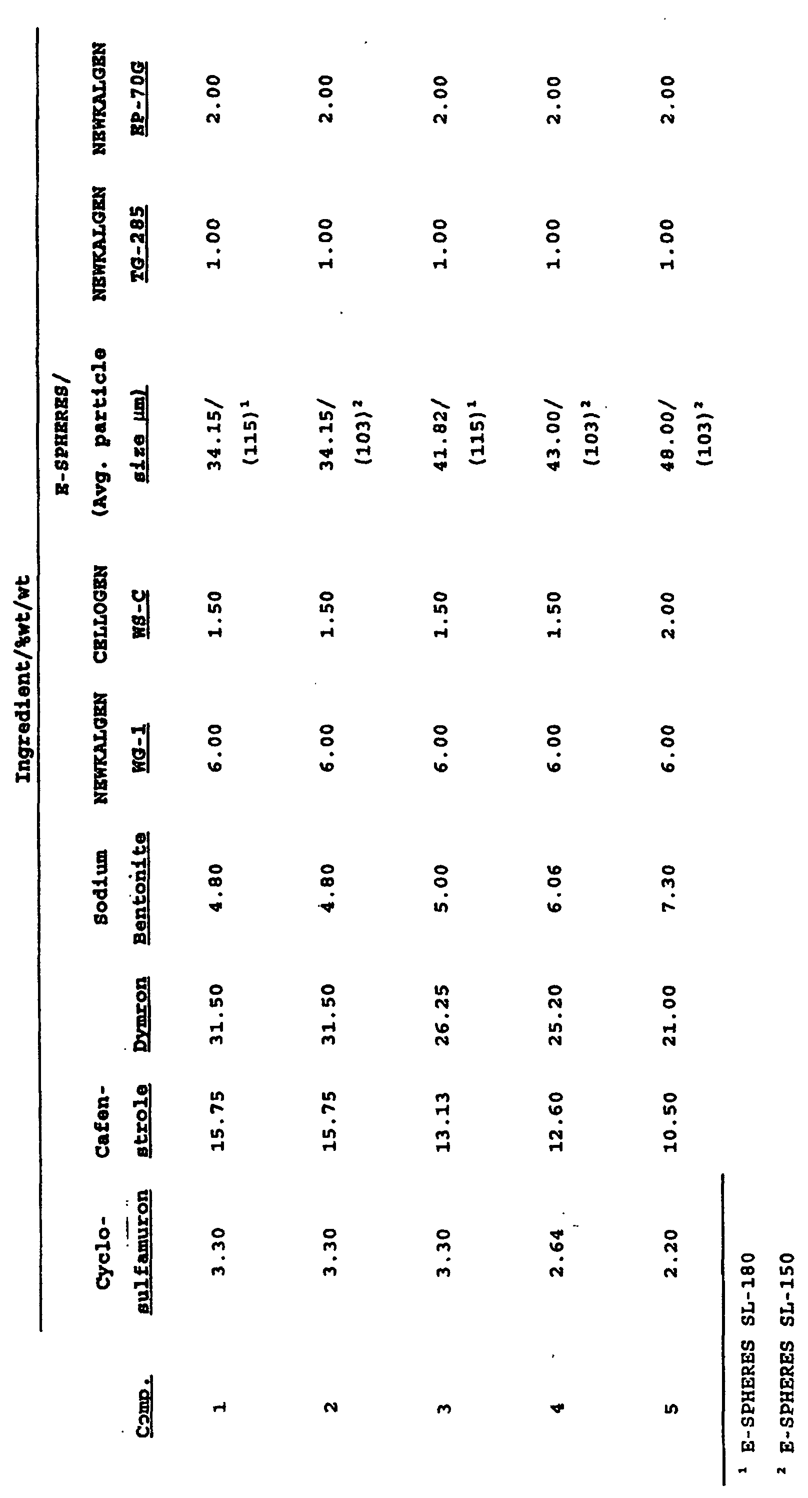

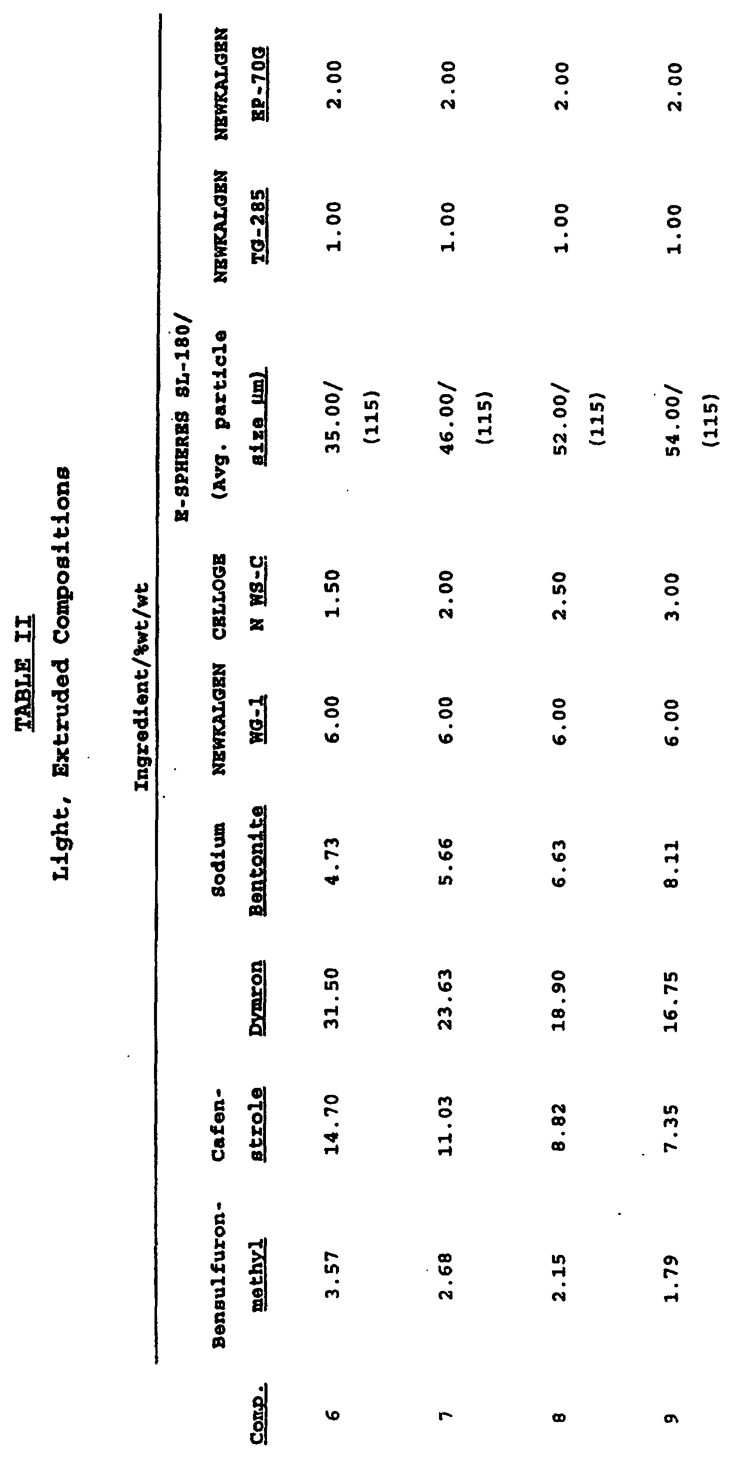

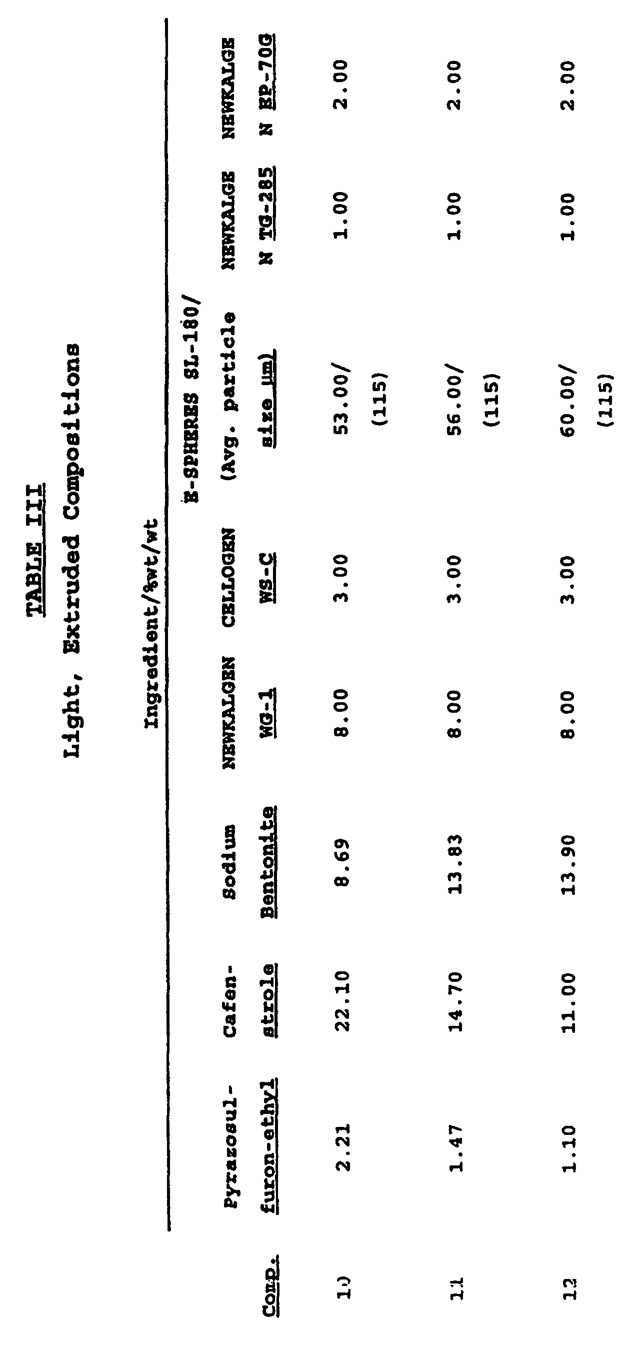

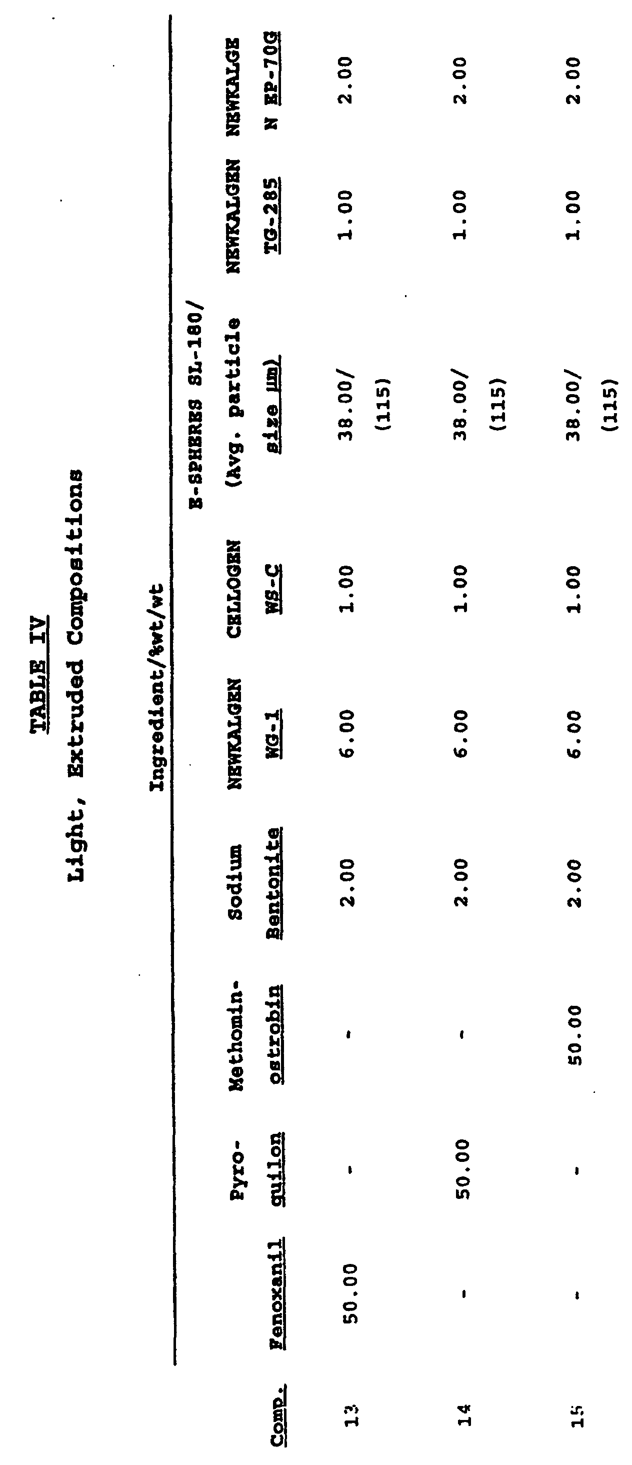

**TABLE V**

| **Light, Extruded Compositions** | |
|---|---|
| **Composition Number 16** | |
| **Ingredient** | **% wt/wt** |
| 1-[1-(*p*-Chlorophenyl)-2-fluoro-4-(4-fluoro-3-phenoxyphenyl)-2-butenyl]cyclopropane (R,S)-(Z) | 5.00 |
| | |
| Carplex #80¹ | 12.00 |
| | |
| Sodium Bentonite | 10.00 |
| | |
| NEWKALGEN WG-1 | 8.00 |
| | |
| CELLOGEN WS-C | 2.00 |
| | |
| E-SPHERES SL-180 (average particle size 115 µm) | 60.00 |
| | |
| NEWKALGEN TG-285 | 1.00 |
| | |
| NEWKALGEN EP-70G | 2.00 |

| | |
|---|---|
| ¹ A precipitated silica | |

### EXAMPLE 2

### Herbicidal evaluations of light, extruded compositions

A field is cultivated, muddled, sown with weed seeds (identified below), and fertilized. Five to six days later, rice seedlings (variety Chiyonishiki) at the 2.5 leaf stage are transplanted into the prepared field. The field is then divided into 100 m² (10 m x 10 m) test plots using plastic plates and each plot is flooded with water to a depth of 5 cm. The flood levels are maintained at 5 cm throughout the evaluations. 20 g of composition number 1 from Example 1 and 20 g of composition number 1 from Example 1 packaged in water-soluble poly(vinyl alcohol) bags 20 g/bag are applied to the center of separate test plots to provide a rate equivalent to 60 g cyclosulfamuron, 300 g cafenstrole and 600 g dymron per hectare. After 42 days, the test plots are divided into quarters for herbicidal evaluations. These divisions are labeled as follows: point A - southwest quarter, point B - northwest quarter, point C - northeast quarter and point D 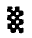 southeast quarter. Each quarter is evaluated for percent weed control compared to a check. The results are summarized in Table VI below. As can be seen from the data in Table VI, the light, extruded composition of the present invention provides control of all weed species throughout the test plots from a single application of the invention composition in the middle of each plot.

| **WEED SPECIES** | | |
|---|---|---|
| **Code Name** | **Common Name** | **Scientific Name** |
| ECHCR | Barnyardgrass | *Echinochloa crus-galli* |
| SCPJU | Bulrush, Japanese | *Scirpus juncoides* |
| MOOVA | Monochoria | *Monochoria vaginallis* |
| LIDPY | Falsepimpernel, common | *Lindernia pyxidaria* |
| SAGPY | Arrowhead | *Sagittaria pygmaea* |
| CYPSE | Flatsedge | *Cyperus serotinus* |

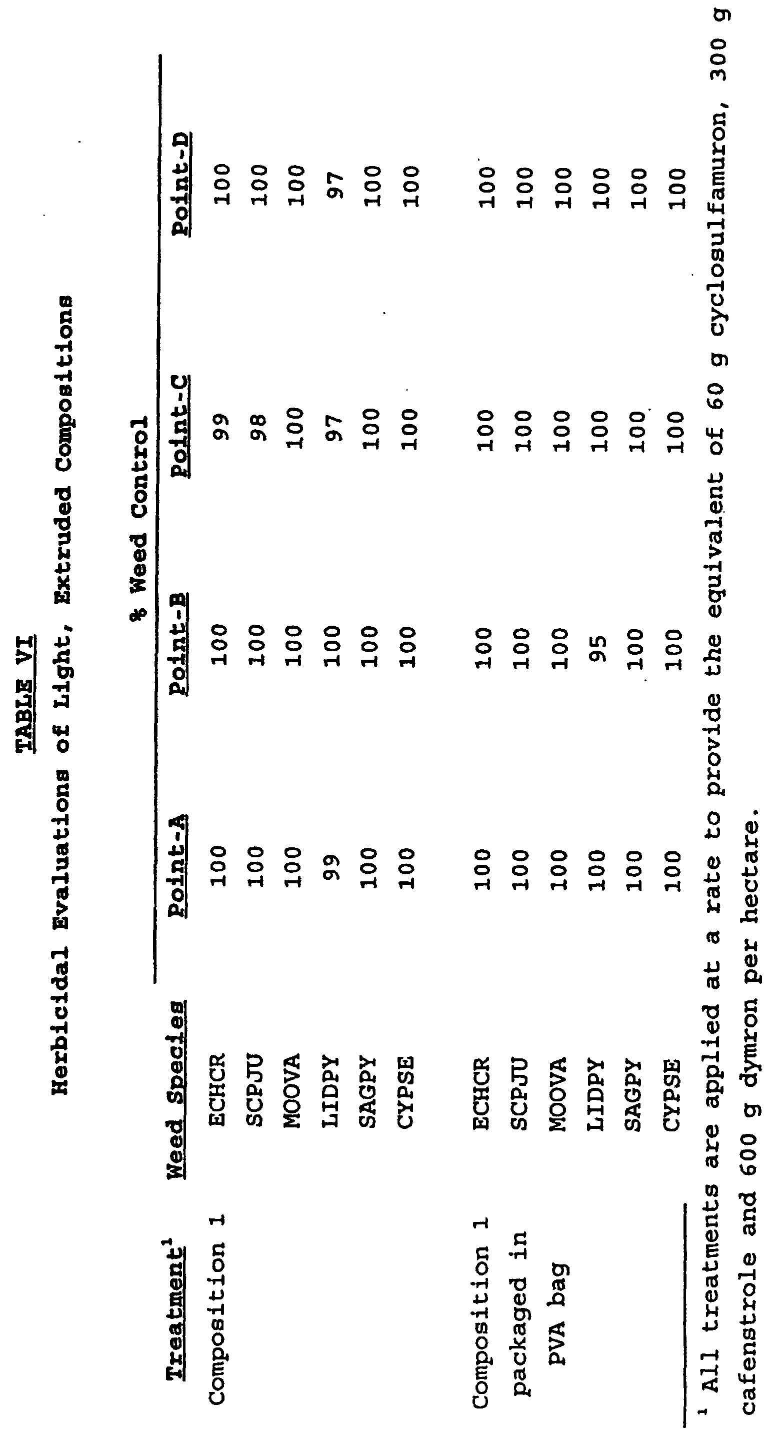

## Claims

1. A light, extruded composition which comprises at least one agricultural compound; a light, extrudable, ceramic carrier; and at least one surface active agent, wherein the light, extrudable, ceramic carrier has a density of about 0.5 g/cm³ to 0.8 g/cm³ and a pressure strength greater than about 150 kg/cm².

2. The composition according to claim 1 which further comprises a mineral carrier and a binder.

3. The composition according to claim 2 which comprises on a weight basis about 0.5% to 75% of one or more agricultural compound(s); about 15% to 90% of the light, extrudable, ceramic carrier; about 2% to 20% of one or more surface active agent(s); about 1% to 30% of the mineral carrier; and about 0.1% to 10% of the binder.

4. The composition according to claim 1 wherein the light, extrudable, ceramic carrier is prepared from a composition which comprises an a weight basis about 50% to 60% silicon(IV) oxide, about 25% to 45% aluminum oxide, about 0.1% to 6% calcium oxide, about 0.1% to 3% iron(III) oxide and about 0.1% to 2% titanium(IV) oxide.

5. The composition according to claim 1 wherein the light, extrudable, ceramic carrier has an average particle size of about 100 µm to 250 µm.

6. The composition according to claim 1 wherein the agricultural compound is selected from the group consisting of a herbicide, an insecticide, an acaricide, a nematicide, a fungicide, a molluscicide, a plant growth regulator, a safener, an algicide and a mildewicide and mixtures thereof.

7. The composition according to claim 6 wherein the herbicide is selected from the group consisting of 2,4-D, 2,4-D-2-ethylhexyl, 2,4-D-isobutyl, 2,4-D-butyl, 2,4-D-calcium, 2,4-D-dimethylammonium, 2,4-D-diolamine, 2,4-D-isooctyl, 2,4-D-isopropyl, 2,4-D-potassium, 2,4-D-sodium, 2,4-D-trolamine, azimsulfuron, bensulfuronmethyl, bentazone, benzofenap, bifenox, bromobutide, butachlor, cafenstrole, chlormethoxynil, chlornitrofen, chlorthiamid, cinmethylin, cinosulfuron, clomeprop, cyclosulfamuron, cyclosulfamuron sodium salt, cyhalofopbutyl, dimepiperate, dimethametryn, dithiopyr, dymron, esprocarb, ethoxysulfuron, etobenzanid, fentrazamid, imazosulfuron, MCPA, MCPA-butyl, MCPA-calcium, MCPA-imethylammonium, MCPA-isooctyl, MCPA-potassium, MCPA-sodium, MCPB, MCPB-ethyl, MCPB-sodium, MCPCA, mefenacet, molinate, naproanilide, oxadiazon, oxaziclomefone, pendimethalin, pentoxazone, piperophos, pretilachlor, prometryn, propanil, pyrazolate, pyrazosulfuron-ethyl, pyrazoxyfen, pyributicarb, simetryn, swep, thenylchlor and thiobencarb and mixtures thereof; the insecticide is selected from the group consisting of acephate, alpha-cypermethrin, benfuracarb, bensultap, BPMC, buprofezin, carbaryl, carbofuran, carbosulfan, cartap, chlorfenapyr, chlorfenvinphos, chlorpyrifosmethyl, chlorpyrifos, cyanofenphos, cycloprothrin, diazinon, dimethoate, dioxabenzofos, disulfoton, EPN, ethofenprox, fenitrothion, fenthion, furathiocarb, isoprocarb, methyl isothiocyanate, isoxathion, malathion, methomyl, metolcarb, monocrotophos, nitenpyram, phenthoate, pirimiphos-ethyl, pirimiphos-methyl, propaphos, propoxur, pyraclofos, pyridaphenthion, quinalphos, tetrachlorvinphos, thiocyclam, thiodicarb, trichlorphon, vamidothion, XMC, xylylcarb, and 1-[1-(pchloropnyl)-2-fluoro-4-(4-fluoro-3-phenoxyphenyl)-2butenyl]cyclopropane (R,S)-(Z), and mixtures thereof; and the fungicide is selected from the group consisting of benomyl, captan, diclomezine, edifenphos, fenoxanil, ferimzone, flutolanil, thalide, iprobenfos, iprodione, isoprothiolane, kasugamycin, kasugamycin hydrochloride hydrate, mepronil, metalaxyl, methominostrobin, oxolinic acid, pencycuron, probenazole, pyroquilon, tecloftalam, thiophanate-methyl, TPN, tricyclazole, triflumizole and validamycin and mixtures thereof.

8. The composition according to claim 1 wherein the agricultural compound is selected from the group consisting of cyclosulfamuron, cafenstrole and dymron and mixtures thereof.

9. The composition according to claim 1 wherein the surface active agent is selected from the group consisting of an alkyl benzene sulfonate, an alkyl naphthalene sulfonate, a lignosulfonate, a naphthalene sulfonate-formaldehyde condensate, an alkyl naphthalene sulfonate-formaldehyde condensate, a polyoxyethylene alkyl ether, a polyoxyethylene alkyl ether sulfate, a polyoxyethylene alkyl ether phosphate, a polyoxyethylene alkyl aryl ether, a polyoxyethylene alkyl aryl ether sulfate, a polyoxyethylene alkyl aryl ether phosphate, a polycarboxylate, a sodium tripolyphosphate, a hexametaphosphate, a phenol sulfonate, an alkyl sulfate, a dialkyl sulfosuccinate, an alkyl ether sulfate and an acetylene glycol and mixtures thereof.

10. The composition according to claim 9 wherein the surface active agent is selected from the group consisting of an alkyl naphthalene sulfonate, a polycarboxylate, a naphthalene sulfonate-formaldehyde condensate and a dialkyl sulfosuccinate and mixtures thereof.

11. The composition according to claim 10 wherein the surface active agent comprises a mixture of a sodium alkyl naphthalene sulfonate, a polycarboxylate, a sodium naphthalene sulfonate-formaldehyde condensate and a sodium alkyl sulfonated alkylate.

12. The composition according to claim 2 wherein the mineral carrier is selected from the group consisting of calcium bentonite, sodium bentonite, montmorillonite, kaolin clay, pyrophyllite clay, sericite clay, diatomaceous earth and talc and mixtures thereof.

13. The composition according to claim 12 wherein the mineral carrier is sodium bentonite.

14. The composition according to claim 2 wherein the binder is selected from the group consisting of sodium carboxymethyl cellulose, hydroxy methyl cellulose, methyl cellulose, ethyl cellulose, dextrin, starch, poly(vinyl alcohol), sodium alginate, sodium polyacrylate, xanthan gum, welan gum and gum arabic and mixtures thereof.

15. The composition according to claim 14 wherein the binder is sodium carboxymethyl cellulose.

16. The composition according to claim 2 which comprises an a weight basis about 0.2% to 7% cyclosulfamuron; about 10% to 20% cafenstrole; about 25% to 35% dymron; about 25% to 45% of a light, extrudable, ceramic carrier which: (1) is prepared from a composition which comprises an a weight basis about 50% to 60% silicon(IV) oxide, about 25% to 45% aluminum oxide, about 0.1% to 6% calcium oxide, about 0.1% to 3% iron(III) oxide and about 0.1% to 2% titanium(IV) oxide, (2) has an average particle size of about 100 µm to 250 µm, and (3) has a pressure strength greater than about 150 kg/ cm²; about 4% to 8% of a sodium alkyl naphthalene sulfonate; about 0.5% to 2% of a mixture of a polycarboxylate and a sodium naphthalene sulfonate-formaldehyde condensate; about 1% to 3% of a sodium alkyl sulfonated alkylate; about 3% to 8% sodium bentonite; and about 1% to 3% sodium carboxymethyl cellulose.

17. A method for applying at least one agricultural compound to the water of paddy fields which comprises applying to the water surface of the paddy fields a light, extruded composition as defined in claims 1, 2, 4, 5, 7 or 8.

18. The method according to claim 17 wherein the surface active agent comprises a mixture of a sodium alkyl naphthalene sulfonate, a polycarboxylate, a sodium naphthalene sulfonate-formaldehyde condensate and a sodium alkyl sulfonated alkylate; the mineral carrier is sodium bentonite; and the binder is sodium carboxymethyl cellulose.

19. A process for the preparation of a light, extruded composition according to claim 1 comprising at least one agricultural compound; a light, extrudable, ceramic carrier; and at least one surface active agent, which process comprises the steps of:
(a) mixing the agricultural compound; the light, extrudable, ceramic carrier; and the surface active agent with water to obtain an extrudable mixture;
(b) extruding the extrudable mixture from step (a) to obtain an extrudate; and
(c) drying the extrudate to obtain the light, extruded composition.

20. The process according to claim 19 wherein step
(a) further comprises a mineral carrier and a binder.

## Patentansprüche

1. Leichte, extrudierte Zusammensetzung, die mindestens einen agrochemischen Werkstoff, einen leichten, extrudierbaren keramischen Träger sowie mindestens ein Tensid enthält, wobei der leichte, extrudierbare keramische Träger eine Dichte von ungefähr 0,5 g/cm³ bis 0,8 g/cm³ und eine Druckfestigkeit von über ungefähr 150 kg/cm² aufweist.

2. Zusammensetzung nach Anspruch 1, die weiterhin einen mineralischen Träger und ein Bindemittel enthält.

3. Zusammensetzung nach Anspruch 2, die auf das Gewicht bezogen ungefähr 0,5% bis 75% eines agrochemischen Wirkstoffs bzw. mehrerer agrochemischer Wirkstoffe, ungefähr 15% bis 90% des leichten, extrudierbaren keramischen Trägers, ungefähr 2% bis 20% eines Tensids oder mehrerer Tenside, ungefähr 1% bis 30% mineralischen Träger und ungefähr 0,1% bis 10% Bindemittel enthält.

4. Zusammensetzung nach Anspruch 1, wobei der leichte, extrudierbare keramische Träger aus einer Zusammensetzung, die auf das Gewicht bezogen ungefähr 50% bis 60% Silicium-(IV)-oxid, ungefähr 25% bis 45% Aluminiumoxid, ungefähr 0,1% bis 6% Calciumoxid, ungefähr 0,1% bis 3% Eisen-(III)-oxid und ungefähr 0,1% bis 2% Titan-(IV)-oxid enthält, hergestellt wird.

5. Zusammensetzung nach Anspruch 1, wobei der leichte, extrudierbare keramische Träger eine durchschnittliche Teilchengröße von ungefähr 100 µm bis 250 µm aufweist.

6. Zusammensetzung nach Anspruch 1, wobei der agrochemische Wirkstoff aus der Gruppe Herbizid, Insektizid, Akarizid, Nematizid, Fungizid, Molluskizid, Pflanzenwachstumsregulator, Safener, Algizid und Anti-Mehltau-Mittel sowie deren Mischungen stammt.

7. Zusammensetzung nach Anspruch 6, wobei das Herbizid aus der Gruppe 2,4-D, 2,4-D-2-Ethylhexyl, 2,4-D-Isobutyl, 2,4-D-Butyl, 2,4-D-Calcium, 2,4-D-Dimethylammonium, 2,4-D-Diolamin, 2,4-D-Isooctyl, 2,4-D-Isopropyl, 2,4-D-Kalium, 2,4-D-Natrium, 2,4-D-Trolamin, Azimsulfuron, Bensulfuronmethyl, Bentazon, Benzofenap, Bifenox, Brombutid, Butachlor, Cafenstrol, Chlormethoxynil, Chlornitrofen, Chlorthiamid, Cinmethylin, Cinosulfuron, Clomeprop, Cyclosulfamuron, Cyclosulfamuron-Natriumsalz, Cyhalofopbutyl, Dimepiperat, Dimethametryn, Dithiopyr, Dymron, Esprocarb, Ethoxysulfuron, Etobenzanid, Fentrazamid, Imazosulfuron, MCPA, MCPA-Butyl, MCPA-Calcium, MCPA-Imethylammonium, MCPA-Isooctyl, MCPA-Kalium, MCPA-Natrium, MCPB, MCPB-Ethyl, MCPB-Natrium, MCPCA, Mefenacet, Molinat, Naproanilid, Oxadiazon, Oxaziclomefon, Pendimethalin, Pentoxazon, Piperophos, Pretilachlor, Prometryn, Propanil, Pyrazolat, Pyrazosulfuronethyl, Pyrazoxyfen, Pyributicarb, Simetryn, Swep, Thenylchlor und Thiobencarb und deren Mischungen stammt, das Insektizid aus der Gruppe Acephat, alpha-Cypermethrin, Benfuracarb, Bensultap, BPMC, Buprofezin, Carbaryl, Carbofuran, Carbosulfan, Cartap, Chlorfenapyr, Chlorfenvinphos, Chlorpyrifos-methyl, Chlorpyrifos, Cyanofenphos, Cycloprothrin, Diazinon, Dimethoat, Dioxabenzofos, Disulfoton, EPN, Ethofenprox, Fenitrothion, Fenthion, Furathiocarb, Isoprocarb, Methylisothiocyanat, Isoxathion, Malathion, Methomyl, Metolcarb, Monocrotophos, Nitenpyram, Phenthoat, Pirimiphos-ethyl, Pirimiphos-methyl, Propaphos, Propoxur, Pyraclofos, Pyridaphenthion, Chinalphos, Tetrachlorvinphos, Thiocyclam, Thiodicarb, Trichlorphon, Vamidothion, XMC, Xylylcarb und (R,S)-(Z)-1-[1-(pchloropnyl)-2-fluor-4-(4-fluor-3-phenoxyphenyl)-2-butenyl]cyclopropan und deren Mischungen stammt und das Fungizid aus der Gruppe Benomyl, Captan, Diclomezin, Edifenphos, Fenoxanil, Ferimzon, Flutolanil, Thalid, Iprobenfos, Iprodion, Isoprothiolan, Kasugamycin, Kasugamycinhydrochlorid-hydrat, Mepronil, Metalaxyl, Methominostrobin, Oxolinisäure, Pencycuron, Probenazol, Pyrochilon, Tecloftalam, Thiophanat-methyl, TPN, Tricyclazol, Triflumizol und Validamycin sowie deren Mischungen stammt.

8. Zusammensetzung nach Anspruch 1, wobei der agrochemische Wirkstoff aus der Gruppe Cyclosulfamuron, Cafenstrol und Dymron sowie deren Mischungen stammt.

9. Zusammensetzung nach Anspruch 1, wobei das Tensid aus der Gruppe bestehend aus Alkylbenzolsufonaten, Alkylnaphthalinsulfonaten, Ligninsulfonaten, Naphthalinsulfonat-Formaldehyd-Kondensaten, Alkylnaphthalinsulfonat-Formaldehyd-Kondensaten, Polyoxyethylenalkylether, Polyoxyethylenalkylethersulfaten, Polyoxyethylenalkyletherphosphaten, Polyoxyethylenalkylarylether, Polyoxyethylenalkylarylethersulfaten, Polyoxethylenalkylaryletherphosphaten, Polycarboxylaten, Natriumtripolyphosphat, Hexametaphosphaten, Phenolsulfonaten, Alkylsulfaten, Dialkylsulfosuccinaten, Alkylethersulfaten und Acetylenglykolen sowie deren Mischungen stammt.

10. Zusammensetzung nach Anspruch 9, wobei das Tensid aus der Gruppe bestehend aus Alkylnaphthalinsulfonaten, Polycarboxylaten, Naphthalinsulfonat-Formaldehyd-Kondensaten und Dialkylsulfosuccinaten sowie deren Mischungen stammt.

11. Zusammensetzung nach Anspruch 10, wobei das Tensid eine Mischung aus einem Natriumalkylnaphthalinsulfonat, Polycarboxylat, Natriumnaphthalinsulfonat-Formaldehyd-Kondensat und Natriumalkylsulfoalkylat enthält.

12. Zusammensetzung nach Anspruch 2, wobei der mineralische Träger aus der Gruppe Calciumbentonit, Natriumbentonit, Montmorillonit, Kaolinton, Pyrophyllitton, Sericitton, Diatomeenerde und Talk sowie deren Mischungen stammt.

13. Zusammensetzung nach Anspruch 12, wobei es sich bei dem mineralischen Träger um Natriumbentonit handelt.

14. Zusammensetzung nach Anspruch 2, wobei das Bindemittel aus der Gruppe Natriumcarboxymethylcellulose, Hydroxymethylcellulose, Methylcellulose, Ethylcellulos, Dextrin, Stärke, Poly(vinylalkohol), Natriumalginat, Natriumpolyacrylat, Xanthangummi, Welan Gum und Gummi arabicum sowie deren Mischungen stammt.

15. Zusammensetzung nach Anspruch 14, wobei es sich bei dem Bindemittel um Natriumcarboxymethylcellulose handelt.

16. Zusammensetzung nach Anspruch 2, die auf das Gewicht bezogen ungefähr 0,2% bis 7% Cyclosulfamuron, ungefähr 10% bis 20% Cafenstrol, ungefähr 25% bis 35% Dymron, ungefähr 25% bis 45% eines leichten, extrudierbaren keramischen Trägers, der (1) aus einer Zusammensetzung, die auf das Gewicht bezogen ungefähr 50% bis 60% Silicium-(IV)-oxid, ungefähr 25% bis 45% Aluminiumoxid, ungefähr 0,1% bis 6% Calciumoxid, ungefähr 0,1% bis 3% Eisen-(III)-oxid und ungefähr 0,1% bis 2% Titan-(IV)-oxid enthält, hergestellt wird, (2) eine durchschnittliche Teilchengröße von ungefähr 100 µm bis 250 µm aufweist und (3) eine Druckfestigkeit von größer ungefähr 150 kg/cm² aufweist, ungefähr 4% bis 8% eines Natriumalkylnaphthalinsulfonats, ungefähr 0,5% bis 2% einer Mischung aus einem Polycarboxylat und einem Natriumnaphthalinsulfonat-Formaldehyd-Kondensat, ungefähr 1% bis 3% eines Natriumalkylsulfoalkylats, ungefähr 3% bis 8% Natriumbentonit und ungefähr 1% bis 3% Natriumcarboxymethylcellulose enthält.

17. Verfahren zur Ausbringung mindestens eines agrochemischen Wirkstoffs auf das Wasser von Wasserreisfeldern, **dadurch gekennzeichnet, daß** man eine leichte, extrudierte Zusammensetzung wie in den Ansprüchen 1, 2, 4, 5, 7 oder 8 definiert auf die Wasseroberfläche des Wasserreisfelds ausbringt.

18. Verfahren nach Anspruch 17, wobei das Tensid eine Mischung aus einem Natriumalkylnaphthalinsulfonat, Polycarboxylat, Natriumnaphthalinsulfonat-Formaldehyd-Kondensat und Natriumalkylsulfoalkylat enthält, es sich bei dem mineralischen Träger um Natriumbentonit handelt und es sich bei dem Bindemittel um Natriumcarboxymethylcellulose handelt.

19. Verfahren zur Herstellung einer leichten, extrudierten Zusammensetzung nach Anspruch 1, die mindestens einen agrochemischen Wirkstoff, einen leichten extrudierbaren keramischen Träger und mindestens ein Tensid enthält, umfassend die folgenden Schritte:
(a) Mischen des agrochemischen Wirkstoffs, des leichten, extrudierbaren keramischen Trägers und des Tensids mit Wasser, wodurch man zu einer extrudierbaren Mischung gelangt,
(b) Extrudieren der extrudierbaren Mischung aus Schritt (a), wodurch man zu einem Extrudat gelangt, sowie
(c) Trocknen des Extrudats, wodurch man die leichte, extrudierte Zusammensetzung erhält.

20. Verfahren nach Anspruch 19, wobei Schritt
(a) weiterhin einen mineralischen Träger und ein Bindemittel enthält.

## Revendications

1. Composition extrudée et légère qui comprend au moins un composé agricole ; un support en céramique extrudable et léger ; et au moins un agent tensioactif, dans laquelle le support en céramique extrudable et léger a une masse volumique d'environ 0,5 g/cm³ à 0,8 g/cm³ et une tenue à la pression supérieure à environ 150 kg/cm².

2. Composition selon la revendication 1, qui comprend en outre un support minéral et un liant.

3. Composition selon la revendication 2, qui comprend en poids environ 0,5 % à 75 % d'un ou plusieurs composé(s) agricole(s) ; environ 15 % à 90 % du support en céramique extrudable et léger ; environ 2 % à 20 % d'un ou plusieurs agent(s) tensioactif(s) ; environ 1 % à 30 % du support minéral ; et environ 0,1 % à 10 % du liant.

4. Composition selon la revendication 1, dans laquelle le support en céramique extrudable et léger est préparé à partir d'une composition qui comprend en poids environ 50 % à 60 % d'oxyde de silicium(IV), environ 25 % à 45 % d'oxyde d'aluminium, environ 0,1 % à 6 % d'oxyde de calcium, environ 0,1 % à 3 % d'oxyde de fer(III) et environ 0,1 % à 2 % d'oxyde de titane(IV).

5. Composition selon la revendication 1, dans laquelle le support en céramique extrudable et léger a une granulométrie moyenne d'environ 100 µm à 250 µm.

6. Composition selon la revendication 1, dans laquelle le composé agricole est choisi dans le groupe constitué d'un herbicide, d'un insecticide, d'un acaricide, d'un nématicide, d'un fongicide, d'un molluscicide, d'un régulateur de la croissance végétale, d'un phytoprotecteur, d'un algicide et d'un agent antimoisissure et de leurs mélanges.

7. Composition selon la revendication 6, dans laquelle l'herbicide est choisi dans le groupe constitué des composés suivants : 2,4-D, 2,4-D-2-éthylhexyle, 2,4-D-isobutyle, 2,4-D-butyle, 2,4-D-calcium, 2,4-D-diméthylammonium, 2,4-D-diolamine, 2,4-D-isooctyle, 2,4-D-isopropyle, 2,4-D-potassium, 2,4-D-sodium, 2,4-D-trolamine, azimsulfuron, bensulfuronméthyle, bentazone, benzofénap, bifénox, bromobutide, butachlor, cafenstrole, chlorméthoxynil, chlornitrofen, chlorthiamid, cinméthyline, cinosulfuron, cloméprop, cyclosulfamuron, sel de sodium du cyclosulfamuron, cyhalofopbutyle, dimépipérate, diméthamétryne, dithiopyr, dymron, esprocarb, éthoxysulfuron, étobenzanid, fentrazamid, imazosulfuron, MCPA, MCPA-butyle, MCPA-calcium, MCPA-diméthylammonium, MCPA-isooctyle, MCPA-potassium, MCPA-sodium, MCPB, MCPB-éthyle, MCPB-sodium, MCPCA, méfénacet, molinate, naproanilide, oxadiazon, oxazicloméfone, pendiméthaline, pentoxazone, pipérophos, prétilachlor, prométryne, propanil, pyrazolate, pyrazosulfuron-éthyle, pyrazoxyfen, pyributicarb, simétryne, swep, thénylchlor et thiobencarb et leurs mélanges ; l'insecticide est choisi dans le groupe constitué des composés suivants: acéphate, alpha-cyperméthrine, benfuracarb, bensultap, BPMC, buprofézine, carbaryle, carbofurane, carbosulfan, cartap, chlorfénapyr, chlorfenvinphos, chlorpyrifosméthyle, chlorpyrifos, cyanofenphos, cycloprothrine, diazinon, diméthoate, dioxabenzofos, disulfoton, EPN, éthofenprox, fénitrothion, fenthion, furathiocarb, isoprocarb, isothiocyanate de méthyle, isoxathion, malathion, méthomyl, métolcarb, monocrotophos, nitenpyram, phenthoate, pirimiphos-éthyle, pirimiphos-méthyle, propaphos, propoxur, pyraclofos, pyridaphenthion, quinalphos, tétrachlorvinphos, thiocyclam, thiodicarb, trichlorphon, vamidothion, XMC, xylylcarb, et 1-[1-(p-chlorophényl)-2-fluoro-4-(4-fluoro-3-phénoxyphényl)-2-butényl]cyclopropane (R,S)-(Z), et leurs mélanges ; et le fongicide est choisi dans le groupe constitué des composés suivants : bénomyle, captan, diclomézine, édifenphos, fénoxanil, férimzone, ftutotanit, thalide, iprobenfos, iprodione, isoprothiolane, kasugamycine, hydrate d'hydrochlorure de kasugamycine, mépronil, métalaxyle, méthominostrobine, acide oxolinique, pencycuron, probénazole, pyroquilon, técloftalam, thiophanate-méthyle, TPN, tricyclazole, triflumizole et validamycine et leurs mélanges.

8. Composition selon la revendication 1, dans laquelle le composé agricole est choisi dans le groupe constitué du cyclosulfamuron, du cafenstrole et du dymron et de leurs mélanges.

9. Composition selon la revendication 1, dans laquelle l'agent tensioactif est choisi dans le groupe constitué d'un alkylbenzènesulfonate, d'un alkylnaphtalènesulfonate, d'un lignosulfonate, d'un condensat de naphtalènesulfonate-formaldéhyde, d'un condensat d'alkylnaphtalènesulfonate-formaldéhyde, d'un éther d'alkyle et de polyoxyéthylène, d'un éther-sulfate d'alkyle et de polyoxyéthylène, d'un éther-phosphate d'alkyle et de polyoxyéthylène, d'un éther d'alkylaryle et de polyoxyéthylène, d'un éther-sulfate d'alkylaryle et de polyoxyéthylène, d'un éther-phosphate d'alkylaryle et de polyoxyéthylène, d'un polycarboxylate, d'un tripolyphosphate de sodium, d'un hexamétaphosphate, d'un phénol-sulfonate, d'un alkylsulfate, d'un dialkylsulfosuccinate, d'un éther-sulfate d'alkyle, et d'un acétylèneglycol et de leurs mélanges.

10. Composition selon la revendication 9, dans laquelle l'agent tensioactif est choisi dans le groupe constitué d'un alkylnaphtalènesulfonate, d'un polycarboxylate, d'un condensat de naphtalènesulfonate-formaldéhyde et d'un dialkylsulfosuccinate et de leurs mélanges.

11. Composition selon la revendication 10, dans laquelle l'agent tensioactif comprend un mélange d'un alkylnaphtalènesulfonate de sodium, d'un polycarboxylate, d'un condensat de naphtalènesulfonate de sodium-formaldéhyde, et d'un alkylalkylate sulfoné de sodium.

12. Composition selon la revendication 2, dans laquelle le support minéral est choisi dans le groupe constitué de la bentonite calcique, de la bentonite sodique, de la montmorillonite, du kaolinton, de la pyrophyllite argileuse, de la séricite argileuse, de la terre à diatomées et du talc et de leurs mélanges.

13. Composition selon la revendication 12, dans laquelle le support minéral est la bentonite sodique.

14. Composition selon la revendication 2, dans laquelle le liant est choisi dans le groupe constitué de la carboxyméthylcellulose sodique, de l'hydroxyméthylcellulose, de la méthylcellulose, de l'éthylcellulose, de la dextrine, de l'amidon, de l'alcool polyvinylique, de l'alginate de sodium, du polyacrylate de sodium, de la gomme de xanthane, de la gomme gellane et de la gomme arabique et de leurs mélanges.

15. Composition selon la revendication 14, dans laquelle le liant est la carboxyméthylcellulose sodique.

16. Composition selon la revendication 2, qui comprend en poids environ 0,2 % à 7 % de cyclosulfamuron ; environ 10 % à 20 % de cafenstrole ; environ 25 % à 35 % de dymron ; environ 25 % à 45 % d'un support en céramique extrudable et léger qui : (1) est préparé à partir d'une composition qui comprend en poids environ 50 % à 60 % d'oxyde de silicium(IV), environ 25 % à 45 % d'oxyde d'aluminium, environ 0,1 % à 6 % d'oxyde de calcium, environ 0,1 % à 3 % d'oxyde de fer(III) et environ 0,1 % à 2 % d'oxyde de titane(IV), (2) a une granulométrie moyenne d'environ 100 µm à 250 µm, et (3) a une tenue à la pression supérieure à environ 150 kg/cm² ; environ 4 % à 8 % d'un alkylnaphtalènesulfonate de sodium ; environ 0,5 % à 2 % d'un mélange d'un polycarboxylate et d'un condensat de naphtalènesulfonate de sodium-formaldéhyde ; environ 1 % à 3 % d'un alkylalkylate sulfoné de sodium ; environ 3 % à 8 % de bentonite sodique ; et environ 1 % à 3 % de carboxyméthylcellulose sodique.

17. Procédé pour appliquer au moins un composé agricole sur l'eau de rizières qui comprend l'application sur la surface de l'eau des rizières d'une composition extrudée et légère telle que définie dans les revendications 1, 2, 4, 5, 7 ou 8.

18. Procédé selon la revendication 17, dans lequel l'agent tensioactif comprend un mélange d'un alkylnaphtalènesulfonate de sodium, d'un polycarboxylate, d'un condensat de naphtalènesulfonate de sodium-formaldéhyde, et d'un alkylalkylate sulfoné de sodium ; le support minéral est la bentonite sodique ; et le liant est la carboxyméthylcellulose sodique.

19. Procédé de préparation d'une composition extrudée et légère selon la revendication 1, comprenant au moins un composé agricole ; un support en céramique extrudable et léger ; et au moins un agent tensioactif, lequel procédé comprend les étapes consistant à :
(a) mélanger le composé agricole ; le support en céramique extrudable et léger ; et l'agent tensioactif avec de l'eau pour obtenir un mélange extrudable ;
(b) extruder le mélange extrudable de l'étape (a) pour obtenir un extrudat ; et
(c) sécher l'extrudat pour obtenir la composition extrudée et légère.

20. Procédé selon la revendication 19, dans lequel l'étape (a) comprend en outre un support minéral et un liant.
